# EUROPÄISCHE PATENTSCHRIFT

(11) **EP 4 210 986 B1**
(45) Veröffentlichungstag und Bekanntmachung des Hinweises auf die Patenterteilung: **27.05.2026**
(21) Anmeldenummer: 21765620.6
(22) Anmeldetag: 17.08.2021
(51) Int. Cl.: G01C 21/36, B60K 35/10, B60K 35/28

(54) **VERFAHREN ZUM VORBEREITEN EINES NAVIGATIONSMANÖVERS EINES FAHRZEUGS**
METHOD FOR PREPARING A NAVIGATION MANEUVER OF A VEHICLE
PROCÉDÉ DE PRÉPARATION D'UNE MANOEUVRE DE NAVIGATION D'UN VÉHICULE

(30) Priorität: 07.09.2020 DE 102020211211
(43) Veröffentlichungstag der Anmeldung: 19.07.2023
(73) Patentinhaber: VOLKSWAGEN AKTIENGESELLSCHAFT, 38440 Wolfsburg (DE)
(72) Erfinder: KUNZE, Alexander, 13585 Berlin (DE); TEBAIBI, Yannis, 38106 Braunschweig (DE)
(86) Internationale Anmeldenummer: PCT/EP2021/072837
(87) Internationale Veröffentlichungsnummer: WO 2022/048905

(56) Entgegenhaltungen:
- EP-A1- 2 899 506
- DE-A1- 102013 224 307
- DE-A1- 102014 219 567
- DE-A1- 102018 203 927
- US-A1- 2014 268 353
- US-A1- 2014 362 195

## Beschreibung

Die Erfindung betrifft ein Verfahren zum Vorbereiten eines Navigationsmanövers eines Fahrzeugs durch Steuerung einer kontaktanalogen Anzeige von Navigationsinformationen einer Augmented-Reality-Display-Vorrichtung, wobei ein Zielmanöver und ein Manöverpunkt des Zielmanövers bestimmt wird, wobei ein erster Anzeigepunkt mit einem ersten Abstand von dem Manöverpunkt auf einem von dem Fahrzeug befahrenen Fahrweg ermittelt wird, wobei ein kontaktanaloges Anzeigeelement zur Anzeige durch die Augmented-Reality-Display-Vorrichtung ab dem ersten Anzeigepunkt generiert und ausgegeben wird, wobei mindestens ein zweiter Anzeigepunkt mit einem zweiten Abstand von dem Manöverpunkt auf einem von dem Fahrzeug befahrenen Fahrweg ermittelt wird, wobei der zweite Abstand geringer zum Manöverpunkt ist als der erste feste Abstand.

Daneben betrifft die Erfindung eine Vorrichtung zum Ausführen eines vorgenannten Verfahrens.

Außerdem betrifft die Erfindung ein Fahrzeug mit einer zum Anzeigen kontaktanaloger Anzeigeelemente eingerichteten Augmented-Reality-Display-Vorrichtung.

Mit der stetigen Weiterentwicklung von Virtual- und Augmented-Reality-Technologien und -Anwendungen finden diese auch Einzug in das Automobil. Bei Augmented-Reality (AR) handelt es sich um die Anreicherung der realen Welt durch virtuelle Elemente, die im dreidimensionalen Raum ortskorrekt registriert beziehungsweise verortet sind und eine Echtzeitinteraktion erlauben. Eine mögliche technische Realisierung um den Fahrerarbeitsplatz entsprechend mit perspektivisch korrekten virtuellen Augmentierungen anzureichern, bietet das Head-Up-Display (HUD).

Gerade bei Head-Up-Displays entsteht die virtuelle Anzeige durch eine im Armaturenbrett integrierte bildgebende Einheit, wie beispielsweise ein TFT-Display. Dieses Bild wird über mehrere Spiegel in Richtung der Windschutzscheibe gelenkt, wo das Licht in das Auge des Fahrers reflektiert wird. Der Fahrer nimmt dieses Bild als eine virtuelle Anzeige im Sichtfeld wahr. Bei der Auslegung solcher Systeme wird der Bereich, in den das Licht reflektiert wird räumlich begrenzt, um eine höhere Helligkeit durch geringere Lichtstreuung zu erzielen. Dieser Bereich wird als "EyeBox" bezeichnet, da sich das Blickfeld des Fahrers in diesem Bereich befinden muss, um eine Wahrnehmung des virtuellen Bildes zu ermöglichen.

Bei den perspektivisch korrekt dargestellten virtuellen Elementen kann es sich unter anderem um Elemente handeln, die die Navigation über ein im Fahrzeug verbautes Navigationssystem vereinfachen. Es können beispielsweise Abbiegehinweise in das Blickfeld des Fahrers projiziert werden, bei denen es für den Fahrer den Anschein hat, als wären diese Hinweise auf die Fahrbahn aufgetragen.

Die US 2011/0102303 A1 zeigt beispielsweise ein Verfahren zur Darstellung von virtuellen Elementen in Form von Abbiegehinweisen, die ein Abbiegemanöver schrittweise in Abhängigkeit der Entfernung ankündigen. Die Abbiegehinweise sind beispielsweise in einem Abstand von 90 m, 60 m und 30 m vor der Abbiegung als virtuelle Elemente im Blickfeld des Fahrers dargestellt.

Die Entgegenhaltung DE 10 2018 203 927 A1 offenbart ein Verfahren zur Steuerung einer Anzeige einer Augmented-Reality-Display-Vorrichtung. Dabei wird eine Anzeigemethode offenbart, bei der ein Pfeil dem Nutzer anzeigt, wo er abzubiegen hat, die durch eine Punktespur unterstützt wird.

Die DE 10 2014 219 567 A1 offenbart eine Möglichkeit der dreidimensionalen Navigation. Dabei ist vorgesehen, dass ein virtuelles Element derart dargestellt wird, dass es als Avatar dem Egofahrzeug vorausfliegt, sodass der Fahrer des Fahrzeugs das Gefühl bekommt, dem Avatar hinterherzufahren.

Die DE 10 2013 224 307 A1 offenbart ein Verfahren zur Anzeige von Navigationsanweisungen in einem Kraftfahrzeug mit Head-Up-Display. Dabei kann eine erste Anzeige beim Annähern an einen Manöverpunkt in eine zweite Anzeige verändert werden.

Der Nachteil des vorgenannten Standes der Technik besteht darin, dass konventionelle automotive Navigationssysteme eine explizite Distanzangabe, meist in Metern, nutzen, um ein bevorstehendes Manöver anzukündigen. Zur Interpretation dieser Distanzangabe in Bezug auf die Umgebung wird ein im Vergleich zu kontaktanalogen Anzeigen hoher kognitiver Aufwand benötigt. Auch bei der Nutzung von expliziten, digitalen Distanzangaben beziehungsweise bei der Verwendung eines Countdowns vor einem Abbiegemanöver ist es denkbar, dass Manöver verpasst werden oder beispielsweise ein Abbiegen zu früh eingeleitet wird.

Der Erfindung liegt nun die Aufgabe zugrunde, ein Verfahren zum Vorbereiten eines Navigationsmanövers eines Fahrzeugs, eine entsprechende Vorrichtung sowie ein Fahrzeug anzugeben, bei denen eine für den Fahrer eines Fahrzeugs intuitive Vorbereitung eines Navigationsmanövers realisiert werden kann.

Diese Aufgabe ist bei der vorliegenden Erfindung zunächst durch die Merkmale des Kennzeichnungsteils des Patentanspruchs 1 dadurch gelöst, dass das kontaktanaloge Anzeigeelement beim Annähern an den zweiten Anzeigepunkt visuell verändert wird.

Unter kontaktanalog sind Anzeigeelemente zu verstehen, die derart in die aktuelle Sicht des Fahrers eingeblendet werden, dass sie als fester Bestandteil der Umgebung wahrgenommen werden. Diese Elemente können mittels einer Augmented-Reality-Display-Vorrichtung dargestellt werden. Dabei kann es sich um ein Display im Mittelbereich oder im Cockpitbereich, beispielsweise im Kombiinstrument des Fahrzeugs, handeln. Alternativ oder zusätzlich kann der Anzeigebereich der Anzeigeeinrichtung als Head-Up-Display ausgestaltet sein. Unter Head-Up-Display ist ein Anzeigebereich zu verstehen, bei dem der Fahrer seine Kopfhaltung beziehungsweise Blickrichtung beibehalten kann, weil die Informationen in sein Sichtfeld, beispielsweise auf die Windschutzscheibe des Fahrzeugs, projiziert werden.

Ein Manöver ist ein vom Fahrer des Fahrzeugs vorgenommener Eingriff in die Quer- und/oder Längsführung des Fahrzeugs, insbesondere eine Geschwindigkeits- und/oder Richtungsänderung des Fahrzeugs. Ein Manöver wird beispielsweise vom Fahrer des Fahrzeugs ausgeführt, um das Fahrzeug auf der gewünschten Route zu halten, wie beispielsweise ein Abbiegevorgang.

In einem ersten Schritt des erfindungsgemäßen Verfahrens erfolgt die Bestimmung eines Zielmanövers und eines Manöverpunktes des Zielmanövers. Das erfindungsgemäße Zielmanöver ist dabei bevorzugt das zeitlich nächste Manöver, besonders bevorzugt das zeitlich nächste Navigationsmanöver einer vorher bestimmten Route, wobei diese Route eine Vielzahl von Navigationsmanövern aufweist. Das Manöver kann jedoch auch auf empfangenen Umfeld-Informationen, beispielsweise durch Verkehrsfunk oder Sensoren des Fahrzeugs, beruhen. Der Manöverpunkt bezeichnet den Ausführungsort des Zielmanövers. Ist das Zielmanöver beispielsweise ein Abbiegen nach rechts in einem 90°-Winkel, dann ist der Manöverpunkt der Ort, an dem das Fahrzeug um 90° nach rechts gewendet werden muss, um das Zielmanöver durchzuführen, insbesondere der Punkt an dem der Fahrer beginnen muss, einen Lenkradeinschlag vorzunehmen.

In einem weiteren Schritt des erfindungsgemäßen Verfahrens wird ein erster Anzeigepunkt mit einem ersten festen Abstand von dem Manöverpunkt und auf einem von dem Fahrzeug befahrenen Fahrweg ermittelt. Bevorzugt wird der erste Anzeigepunkt so bestimmt, dass er sich im Fahrweg des Fahrzeugs auf der Straße befindet. Insbesondere wird der erste Anzeigepunkt auf einem Fahrweg zwischen einer aktuellen Fahrzeugposition und dem Manöverpunkt ermittelt. Der erste Anzeigepunkt wird bevorzugt in der Mitte einer von dem Fahrzeug befahrenen Spur oder Fahrbahn ermittelt. Der erste Anzeigepunkt wird mit einem ersten festen Abstand von dem Manöverpunkt ermittelt, sprich die Relativlage von dem ersten Anzeigepunkt und dem Manöverpunkt ist unveränderlich. Ein erster Anzeigepunkt ist im Rahmen des erfindungsgemäßen Verfahrens somit eine feste Ortsangabe im dreidimensionalen Raum der realen Welt, an der ein erstes kontaktanaloges Anzeigeelement, das Navigationsinformationen darstellt, eingeblendet werden soll.

In einem weiteren Schritt des erfindungsgemäßen Verfahrens erfolgt ein Generieren und Ausgeben eines kontaktanalogen Anzeigeelements zur Anzeige durch die Augmented-Reality-Display-Vorrichtung ab dem ersten Anzeigepunkt. Mit anderen Worten wird das kontaktanaloge Anzeigeelement, das in diesem Verfahrensschritt generiert und ausgegeben wurde, durch die Augmented-Reality-Display-Vorrichtung so angezeigt, dass der Fahrer des Fahrzeugs es auf der Straße an dem Ort liegend wahrnimmt, der durch den ersten Anzeigepunkt definiert ist

Im erfindungsgemäßen Verfahren wird in einem weiteren Schritt ein zweiter Anzeigepunkt mit einem zweiten festen Abstand von dem Manöverpunkt auf einem von dem Fahrzeug befahrenen Fahrweg ermittelt. Bevorzugt wird der zweite Anzeigepunkt so bestimmt, dass er sich im Fahrweg des Fahrzeugs auf der Straße befindet, mit einem Abstand von dem Manöverpunkt, der dem zweiten festen Abstand entspricht. Insbesondere wird der zweite Anzeigepunkt auf einem Fahrweg zwischen einer aktuellen Fahrzeugposition und dem Manöverpunkt ermittelt. Der zweite Anzeigepunkt wird bevorzugt in der Mitte einer von dem Fahrzeug befahrenen Spur oder Fahrbahn ermittelt. Der zweite Anzeigepunkt wird mit einem ersten festen Abstand von dem Manöverpunkt ermittelt, sprich die Relativlage von dem zweiten Anzeigepunkt und dem Manöverpunkt ist unveränderlich. Ein zweiter Anzeigepunkt ist im Rahmen des erfindungsgemäßen Verfahrens somit eine feste Ortsangabe im dreidimensionalen Raum der realen Welt, an der ein zweites kontaktanaloges Anzeigeelement, das Navigationsinformationen darstellt, eingeblendet werden soll.

Erfindungsgemäß wird das kontaktanaloge Anzeigeelement, das ab dem ersten Anzeigepunkt dargestellt wird, bis zum Erreichen des zweiten Anzeigepunktes visuell verändert. Die visuelle Veränderung wird dabei stufenlos realisiert. Dem Fahrer wird dadurch visualisiert, dass er sich einem Manöverpunkt nähert. Der zweite Anzeigepunkt kann auch mit dem Manöverpunkt an demselben Punkt angeordnet sein, sodass das kontaktanaloge Anzeigeelement bis zum Erreichen des Manöverpunktes visuell verändert wird.

Der Fahrer wird somit ab Erreichen des ersten Anzeigepunktes auf ein bevorstehendes Manöver vorbereitet, ohne dass plötzliche Navigationshinweise eingeblendet werden, die der Fahrer möglicherweise zu spät oder gar nicht wahrnimmt.

Weitere bevorzugte Ausgestaltungen der Erfindung ergeben sich aus den übrigen, in den Unteransprüchen genannten Merkmalen.

Bei einer ersten Ausgestaltung des erfindungsgemäßen Verfahrens ist vorgesehen, dass der erste Abstand und/oder der zweite Abstand abhängig von der Zeit bis zum Manöverpunkt ist. Denkbar ist, dass der erste Abstand und/oder der zweite Abstand bevorzugt mit Hilfe der Geschwindigkeit des Fahrzeugs bestimmt werden. Bei einer hohen Geschwindigkeit kann der erste Abstand und/oder der zweite Abstand größer bestimmt werden als bei einer geringeren Geschwindigkeit, um dem Fahrer genug Zeit zu geben, sich auf das Zielmanöver vorzubereiten. Ferner bevorzugt wird der erste feste Abstand und/oder der zweite feste Abstand mit Hilfe der Position des Fahrzeugs bestimmt.

Alternativ oder zusätzlich ist bei einer weiteren Ausgestaltung des erfindungsgemäßen Verfahrens vorgesehen, dass der erste Abstand und/oder der zweite Abstand abhängig von der Distanz bis zum Manöverpunkt ist.

Bei der visuellen Veränderung des kontaktanalogen Anzeigeelements ist erfindungsgemäß vorgesehen, dass das kontaktanaloge Anzeigeelement beim Annähern an den zweiten Anzeigepunkt rotiert wird.

Erfindungsgemäß ist vorgesehen, dass das kontaktanaloge Anzeigeelement ein Orientierungsmerkmal aufweist, dass das Orientierungsmerkmal am ersten Anzeigepunkt relativ zur Fahrtrichtung in einem Winkel von etwa 0 Grad orientiert ist und dass das Orientierungsmerkmal am zweiten Anzeigepunkt relativ zur Fahrtrichtung in einem von 0 Grad verschiedenen Winkel orientiert ist. Bei dem Orientierungsmerkmal kann es sich um verschiedene mögliche Ausgestaltungen handeln. Wichtig ist, dass das Orientierungsmerkmal dazu verwendet werden kann, eine Richtung anzuzeigen.

Beim Einstellen des Winkels ist erfindungsgemäß vorgesehen, dass das Orientierungsmerkmal nach Art eines Kompass in die Richtung des auszuführenden Manövers zeigt. Zunächst ist das Orientierungsmerkmal noch in einem Winkel von 0 Grad relativ zur Fahrtrichtung angeordnet. Das heißt, dass das Orientierungsmerkmal in dem Fall zur Fahrtrichtung ausgerichtet ist. Beim Annähern an den zweiten Anzeigepunkt beziehungsweise an den Manöverpunkt zeigt das Orientierungsmerkmal erfindungsgemäß immer mehr in Richtung der auszuführenden Abbiegung, sodass sich der Winkel des Orientierungsmerkmals relativ zur Fahrtrichtung ändert. Bei einer weiteren bevorzugten Ausgestaltung des erfindungsgemäßen Verfahrens ist vorgesehen, dass das kontaktanaloge Anzeigeelement als Richtungspfeil dargestellt wird. Der Richtungspfeil weist mit seiner Pfeilspitze ein eindeutiges Orientierungsmerkmal auf, durch das dem Fahrer des Fahrzeugs eine eindeutige Zuordnung beispielsweise eines Abbiegehinweises möglich ist.

Bei einer weiteren bevorzugten Ausgestaltung des erfindungsgemäßen Verfahrens ist vorgesehen, dass das kontaktanaloge Anzeigeelement am ersten Anzeigepunkt zumindest teilweise transparent dargestellt wird und dass die Transparenz des kontaktanalogen Anzeigeelements am zweiten Anzeigepunkt geringer ist als am ersten Anzeigepunkt. Die teilweise Transparenz am ersten Anzeigepunkt, die bis zum Erreichen des zweiten Anzeigepunkts immer weiter abnimmt, erhöht nach und nach die Sichtbarkeit des kontaktanalogen Anzeigeelements. Auf diese Weise nimmt der Fahrer des Fahrzeugs das kontaktanaloge Anzeigeelement immer mehr wahr, je weiter sich das Fahrzeug dem zweiten Anzeigepunkt beziehungsweise dem Manöverpunkt annähert.

Alternativ oder zusätzlich kann bei einer weiteren Ausgestaltung des erfindungsgemäßen Verfahrens vorgesehen sein, dass das kontaktanaloge Anzeigeelement am ersten Anzeigepunkt mit einer geringeren Größe dargestellt wird als am zweiten Anzeigepunkt. Analog zu den obigen Ausführungen wird das kontaktanaloge Anzeigeelement immer sichtbarer beziehungsweise einfacher wahrnehmbar, je weiter sich das Fahrzeug dem zweiten Anzeigepunkt beziehungsweise dem Manöverpunkt annähert.

Die zuvor genannte Aufgabe wird außerdem gelöst von einer Vorrichtung, gemäß dem Kennzeichnungsteil des Patentanspruchs 9, mit mindestens einer Eingangsschnittstelle, mit mindestens einer Steuereinheit, mit mindestens einem Grafikmodul und mit mindestens einer Ausgangsschnittstelle, wobei die Eingangsschnittstelle Daten empfängt, wobei die Steuereinheit ein Zielmanöver und einen Manöverpunkt des Zielmanövers bestimmt, wobei die Steuereinheit einen ersten Anzeigepunkt mit einem ersten Abstand von dem Manöverpunkt auf einem von dem Fahrzeug befahrenen Fahrweg ermittelt, wobei die Steuereinheit einen zweiten Anzeigepunkt mit einem zweiten Abstand von dem Manöverpunkt auf einem von dem Fahrzeug befahrenen Fahrweg ermittelt, wobei das Grafikmodul ein kontaktanaloges Anzeigeelement generiert und wobei das Grafikmodul das kontaktanaloge Anzeigeelement beim Annähern an den zweiten Anzeigepunkt visuell verändert.

Bei der Vorrichtung kann es sich beispielsweise um ein Navigationssystem handeln, das eine grafische Ausgabe von kontaktanalogen Elementen gemäß der erfindungsgemäßen Vorrichtung ermöglicht.

Erfindungsgemäß kann die Vorrichtung das erfindungsgemäße Verfahren ausführen. Die obigen Ausführungen zum erfindungsgemäßen Verfahren gelten entsprechend auch für die erfindungsgemäße Vorrichtung.

Daneben wird die zuvor genannte Aufgabe gelöst von einem Fahrzeug, gemäß dem Kennzeichnungsteil des Patentanspruchs 8, wobei das Fahrzeug eine Vorrichtung nach Anspruch 7 umfasst. Die obigen Ausführungen zur erfindungsgemäßen Vorrichtung gelten entsprechend auch für das erfindungsgemäße Fahrzeug.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Anzeigebereichs einer Anzeigeeinrichtung bei Durchführung eines Ausführungsbeispiels eines erfindungsgemäßen Verfahrens,
- Figur 2: eine weitere Darstellung eines Anzeigebereichs einer Anzeigeeinrichtung bei Durchführung des Ausführungsbeispiel des erfindungsgemäßen Verfahrens gemäß Figur 1 und
- Figur 3: eine weitere Darstellung des Anzeigebereichs der Anzeigeeinrichtung bei Durchführung des Ausführungsbeispiel des erfindungsgemäßen Verfahrens gemäß Figur 1 und Figur 2.

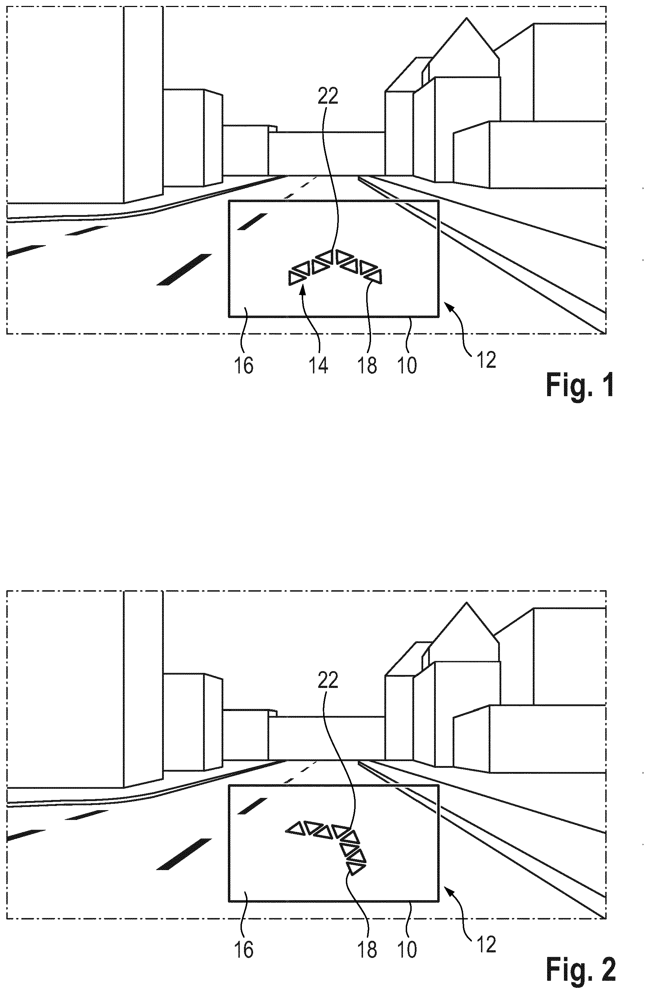

Figur 1 zeigt eine kontaktanaloge Anzeige 10 einer Augmented-Reality-Display-Vorrichtung 12 in der ein dreidimensionaler Raum dargestellt wird. Durch ein von der Augmented-Reality-Display-Vorrichtung 12 durchgeführtes Verfahren wird in dem dreidimensionalen Raum wird ein erster Anzeigepunkt 14 auf dem ebenfalls dargestellten Fahrweg 16 zur Anzeige eines kontaktanalogen Anzeigeelements 18 bestimmt.

Das kontaktanaloge Anzeigeelement 18 wird aus Navigationsinformationen der Augmented-Reality-Display-Vorrichtung 12 bestimmt und soll Informationen über ein Zielmanöver und einen Manöverpunkt des Zielmanövers liefern, damit der Fahrer zeitig auf das Navigationsmanöver vorbereitet werden kann. Dazu wird in einem ersten Schritt der erste Anzeigepunkt 14 mit einem ersten Abstand von dem Manöverpunkt auf dem von dem Fahrzeug befahrenen Fahrweg 16 ermittelt. Anschließend wird das kontaktanaloge Anzeigeelement 18 zur Anzeige durch die Augmented-Reality-Display-Vorrichtung 12 ab dem ersten Anzeigepunkt 14 generiert und ausgegeben.

Zusätzlich wird ein zweiter Anzeigepunkt 20 mit einem zweiten Abstand von dem Manöverpunkt auf dem Fahrweg 16 ermittelt. Der zweite Abstand ist entsprechend geringer, relativ zum Manöverpunkt, als der erste Abstand. Das Verfahren sieht ferner vor, dass das kontaktanaloge Anzeigeelement 18 beim Annähern an den zweiten Anzeigepunkt 20 visuell verändert wird. Der erste Anzeigepunkt 14 und der zweite Anzeigepunkt 20 dienen folglich dazu, um einen Bereich zu bestimmen, in denen das kontaktanaloge Anzeigeelement 18 visuell verändert wird.

Das kontaktanaloge Anzeigeelement 18 wird perspektivisch korrekt in der kontaktanalogen Anzeige 10 dargestellt, sodass dem Fahrer des Fahrzeugs der Eindruck vermittelt wird, dass das kontaktanaloge Anzeigeelement 18 Teil der Umgebung ist. Bei diesem Ausführungsbeispiel handelt es sich bei dem kontaktanalogen Anzeigeelement 18 um einen Richtungspfeil, der durch seine Pfeilspitze ein Orientierungsmerkmal 22 aufweist.

In Figur 1 wird das kontaktanaloge Anzeigeelement 18 im ersten Anzeigepunkt 14 angezeigt. Dabei weist das Orientierungsmerkmal, also die Pfeilspitze, in Fahrtrichtung des Fahrzeugs. Folglich wird noch kein Navigationsmanöver durch das kontaktanaloge Anzeigeelement 18 angekündigt.

In Figur 2 befindet sich das Fahrzeug zwischen dem ersten Anzeigepunkt 14 und dem zweiten Anzeigepunkt 20. Die visuelle Veränderung des kontaktanalogen Anzeigeelements 18 wird durch Rotation desselben hervorgerufen. Durch die Rotation wird auch das Orientierungsmerkmal 22, also die Pfeilspitze, rotiert. Auf diese Weise wird dem Fahrer des Fahrzeugs signalisiert, dass er sich einem zweiten Anzeigepunkt 20 und somit auch einem Manöverpunkt nähert, an dem ein Navigationsmanöver auszuführen ist. Durch Darstellung des kontaktanalogen Anzeigeelements 18 in Form eines Pfeils, ist für den Fahrer des Fahrzeugs leicht zu erkennen, dass das nächste Navigationsmanöver eine Rechtskurve sein wird, da in Figur 2 deutlich zu erkennen ist, dass das Orientierungsmerkmal 22 und entsprechend das kontaktanaloge Anzeigeelement 18 im Uhrzeigersinn rotiert wurde.

Da der Winkel relativ zur Fahrtrichtung, um die das kontaktanaloge Anzeigeelement 18 gedreht wurde, noch relativ steil ist, kann sich der Fahrer darauf einstellen, dass das auszuführende Navigationsmanöver noch nicht unmittelbar bevorsteht. Das kontaktanaloge Anzeigeelement 18 wird in diesem Ausführungsbeispiel stetig mit Annäherung an den zweiten Anzeigepunkt 20 rotiert. Dem Fahrer wird somit nach Art eines Kompasses leicht verständlich dargestellt, in welche Richtung das Fahrzeug zu führen ist.

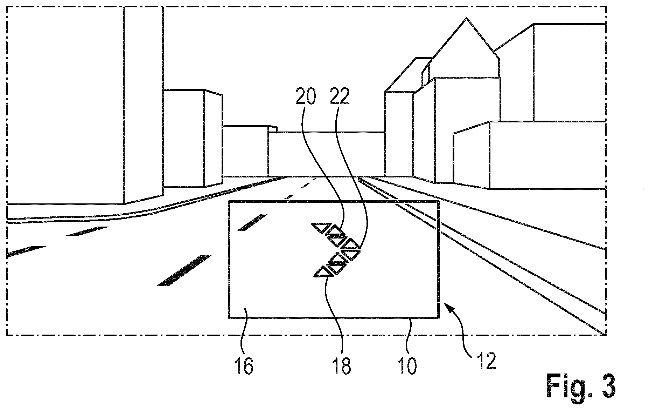

In Figur 3 ist das Fahrzeug an dem zweiten Anzeigepunkt 20 angelangt. Der zweite Anzeigepunkt 20 fällt in diesem Ausführungsbeispiel mit dem Manöverpunkt zusammen. Das Orientierungsmerkmal 22 beziehungsweise das kontaktanaloge Anzeigeelement 18 ist in Figur 3 bereits um 90 Grad relativ zur Fahrtrichtung im Uhrzeigersinn gedreht worden. Auf diese Weise wird dem Fahrer angezeigt, dass nun das Abbiegemanöver in Form einer Rechtskurve auszuführen ist. Nach Beendigung des Abbiegemanövers wird entsprechend dem Verfahren ein neuer Manöverpunkt bestimmt und das Verfahren wird entsprechend der obigen Beschreibung erneut ausgeführt, bis das Fahrzeug seinen Zielort erreicht hat.

### Bezugszeichenliste

- 10: Kontaktanaloge Anzeige
- 12: Augmented-Reality-Display-Vorrichtung
- 14: Erster Anzeigepunkt
- 16: Fahrweg
- 18: Kontaktanaloges Anzeigeelement
- 20: zweiter Anzeigepunkt
- 22: Orientierungsmerkmal

## Patentansprüche

1. Verfahren zum Vorbereiten eines Navigationsmanövers eines Fahrzeugs durch Steuerung einer kontaktanalogen Anzeige (10) von Navigationsinformationen einer Augmented-Reality-Display-Vorrichtung (12), wobei ein Zielmanöver und ein Manöverpunkt des Zielmanövers bestimmt wird, wobei ein erster Anzeigepunkt (14) mit einem ersten Abstand von dem Manöverpunkt auf einem von dem Fahrzeug befahrenen Fahrweg (16) ermittelt wird, wobei ein kontaktanaloges Anzeigeelement (18) zur Anzeige durch die Augmented-Reality-Display-Vorrichtung (12) ab dem ersten Anzeigepunkt (14) generiert und ausgegeben wird, wobei mindestens ein zweiter Anzeigepunkt (20) mit einem zweiten Abstand von dem Manöverpunkt auf einem von dem Fahrzeug befahrenen Fahrweg (16) ermittelt wird, wobei der zweite Abstand geringer zum Manöverpunkt ist als der erste Abstand, wobei das kontaktanaloge Anzeigeelement (18) beim Annähern an den zweiten Anzeigepunkt (20) stufenlos visuell verändert wird, **dadurch gekennzeichnet, dass** das kontaktanaloge Anzeigeelement (18) beim Annähern an den zweiten Anzeigepunkt (20) nach Art eines Kompass rotiert wird, wobei das kontaktanaloge Anzeigeelement (18) ein Orientierungsmerkmal (22) aufweist, wobei das Orientierungsmerkmal (22) am ersten Anzeigepunkt (14) relativ zur Fahrtrichtung in einem Winkel von etwa 0 Grad orientiert ist und wobei das Orientierungsmerkmal (22) am zweiten Anzeigepunkt (20) relativ zur Fahrtrichtung in einem von 0 Grad verschiedenen Winkel orientiert ist, wobei das Orientierungsmerkmal (22) beim Annähern an den zweiten Anzeigepunkt beziehungsweise an den Manöverpunkt immer mehr in Richtung einer auszuführenden Abbiegung zeigt, sodass sich der Winkel des Orientierungsmerkmals (22) relativ zur Fahrtrichtung ändert.

2. Verfahren nach Anspruch 1, **dadurch gekennzeichnet, dass** der erste Abstand und/oder der zweite Abstand abhängig von der Zeit bis zum Manöverpunkt ist.

3. Verfahren nach Anspruch 1 oder 2, **dadurch gekennzeichnet, dass** der erste Abstand und/oder der zweite Abstand abhängig von der Distanz bis zum Manöverpunkt ist.

4. Verfahren nach einem der Ansprüche 1 bis 3, **dadurch gekennzeichnet, dass** das kontaktanaloge Anzeigeelement (18) als Richtungspfeil dargestellt wird.

5. Verfahren nach einem der Ansprüche 1 bis 4, **dadurch gekennzeichnet, dass** das kontaktanaloge Anzeigeelement (18) am ersten Anzeigepunkt (14) zumindest teilweise transparent dargestellt wird und dass die Transparenz des kontaktanalogen Anzeigeelements (18) am zweiten Anzeigepunkt (20) geringer ist als am ersten Anzeigepunkt (20).

6. Verfahren nach einem der Ansprüche 1 bis 5, **dadurch gekennzeichnet, dass** das kontaktanaloge Anzeigeelement (18) am ersten Anzeigepunkt (14) mit einer geringeren Größe dargestellt wird als am zweiten Anzeigepunkt (20).

7. Vorrichtung zum Ausführen eines Verfahrens nach einem der Ansprüche 1 bis 6, mit mindestens einer Eingangsschnittstelle, mit mindestens einer Steuereinheit, mit mindestens einem Grafikmodul und mit mindestens einer Ausgangsschnittstelle, wobei die Eingangsschnittstelle eingerichtet ist, Daten zu empfangen, wobei die Steuereinheit eingerichtet ist, ein Zielmanöver und einen Manöverpunkt des Zielmanövers zu bestimmen, wobei die Steuereinheit einen ersten Anzeigepunkt (14) mit einem ersten Abstand von dem Manöverpunkt auf einem von dem Fahrzeug befahrenen Fahrweg (16) ermittelt, wobei die Steuereinheit einen zweiten Anzeigepunkt (20) mit einem zweiten Abstand von dem Manöverpunkt auf einem von dem Fahrzeug befahrenen Fahrweg (16) ermittelt, wobei das Grafikmodul eingerichtet ist, ein kontaktanaloges Anzeigeelement zu generieren, wobei das Grafikmodul das kontaktanaloge Anzeigeelement (18) beim Annähern an den zweiten Anzeigepunkt (20) visuell verändert, wobei die Vorrichtung dazu ausgestaltet und eingerichtet ist, ein Verfahren gemäß einem der Ansprüche 1 bis 6 durchzuführen.

8. Fahrzeug mit einer zum Anzeigen kontaktanaloger Anzeigeelemente eingerichtete Augmented-Reality-Display-Vorrichtung (12) und mit einer Vorrichtung nach Anspruch 7.

## Claims

1. Method for preparing a navigation maneuver of a vehicle by controlling a contact-analogous display (10), displaying navigation information, of an augmented reality display device (12), wherein a target maneuver and a maneuver point for the target maneuver are determined, wherein a first display point (14) is ascertained with a first spacing from the maneuver point on a travel path (16) on which the vehicle is traveling, wherein a contact-analogous display element (18) is generated and output for display by the augmented reality display device (12) on reaching the first display point (14), wherein at least a second display point (20) is ascertained with a second spacing from the maneuver point on a travel path (16) on which the vehicle is traveling, wherein the second spacing to the maneuver point is smaller than the first spacing, wherein the contact-analogous display element (18) is continuously visually changed when approaching the second display point (20), **characterized in that** the contact-analogous display element (18) is rotated in the manner of a compass when approaching the second display point (20), wherein the contact-analogous display element (18) has an orientation feature (22), wherein the orientation feature (22), at the first display point (14), is oriented at an angle of approximately 0 degrees relative to the direction of driving and wherein the orientation feature (22), at the second display point (20), is oriented at an angle other than 0 degrees relative to the direction of driving, wherein the orientation feature (22), when approaching the second display point or the maneuver point, points increasingly in the direction of a turn to be carried out, with the result that the angle of the orientation feature (22) changes relative to the direction of driving.

2. Method according to claim 1, **characterized in that** the first spacing and/or the second spacing depends on the time to reach the maneuver point.

3. Method according to claim 1 or 2, **characterized in that** the first spacing and/or the second spacing depends on the distance to the maneuver point.

4. Method according to any of claims 1 to 3, **characterized in that** the contact-analogous display element (18) is displayed as a directional arrow.

5. Method according to any of claims 1 to 4, **characterized in that** the contact-analogous display element (18) is displayed at least partially transparently at the first display point (14) and **in that** the transparency of the contact-analogous display element (18) is lower at the second display point (20) than at the first display point (20).

6. Method according to any of claims 1 to 5, **characterized in that** the contact-analogous display element (18) is displayed with a smaller size at the first display point (14) than at the second display point (20).

7. Device for carrying out a method according to any of claims 1 to 6, comprising at least one input interface, comprising at least one control unit, comprising at least one graphics module, and comprising at least one output interface, wherein the input interface is configured to receive data, wherein the control unit is configured to determine a target maneuver and a maneuver point for the target maneuver,
wherein the control unit ascertains a first display point (14) with a first spacing from the maneuver point on a travel path (16) on which the vehicle is traveling, wherein the control unit ascertains a second display point (20) with a second spacing from the maneuver point on a travel path (16) on which the vehicle is traveling, wherein the graphics module is configured to generate a contact-analogous display element,
wherein the graphics module visually changes the contact-analogous display element (18) when approaching the second display point (20), wherein the device is designed and configured to perform a method according to any of claims 1 to 6.

8. Vehicle comprising an augmented reality display device (12) configured to display contact-analogous display elements, and comprising a device according to claim 7.

## Revendications

1. Procédé de préparation d'une manœuvre de navigation d'un véhicule par commande d'un affichage analogique de contact (10) d'informations de navigation d'un dispositif d'affichage à réalité augmentée (12), dans lequel une manœuvre cible et un point de manœuvre de la manœuvre cible sont déterminés, dans lequel un premier point d'affichage (14) est établi avec une première distance par rapport au point de manœuvre sur une voie de circulation (16) empruntée par le véhicule, dans lequel un élément d'affichage (18) analogique de contact est généré et émis pour l'affichage par le dispositif d'affichage à réalité augmentée (12) à partir du premier point d'affichage (14), dans lequel au moins un second point d'affichage (20) est établi à une seconde distance par rapport au point de manœuvre sur une voie de circulation (16) empruntée par le véhicule, dans lequel la seconde distance est inférieure par rapport au point de manœuvre à la première distance, dans lequel l'élément d'affichage (18) analogique de contact est modifié visuellement en continu lorsqu'il s'approche du second point d'affichage (20), **caractérisé en ce que** l'élément d'affichage (18) analogique de contact est entraîné en rotation à la manière d'une boussole lorsqu'il s'approche du second point d'affichage (20), dans lequel l'élément d'affichage (18) analogique de contact présente une caractéristique d'orientation (22), dans lequel la caractéristique d'orientation (22) est orientée au niveau du premier point d'affichage (14) selon un angle d'environ 0 degré par rapport à la direction de déplacement et dans lequel la caractéristique d'orientation (22) est orientée au niveau du second point d'affichage (20) selon un angle différent de 0 degré par rapport à la direction de déplacement, dans lequel la caractéristique d'orientation (22) pointe de plus en plus dans la direction d'un virage à effectuer lorsqu'on se rapproche du second point d'affichage ou du point de manœuvre, de sorte que l'angle de la caractéristique d'orientation (22) change par rapport à la direction de déplacement.

2. Procédé selon la revendication 1, **caractérisé en ce que** la première distance et/ou la seconde distance dépendent du temps jusqu'au point de manœuvre.

3. Procédé selon la revendication 1 ou 2, **caractérisé en ce que** la première distance et/ou la seconde distance dépendent de la distance jusqu'au point de manœuvre.

4. Procédé selon l'une des revendications 1 à 3, **caractérisé en ce que** l'élément d'affichage (18) analogique de contact est représenté comme une flèche directionnelle.

5. Procédé selon l'une des revendications 1 à 4, **caractérisé en ce que** l'élément d'affichage (18) analogique de contact est représenté au moins partiellement de manière transparente au niveau du premier point d'affichage (14) et **en ce que** la transparence de l'élément d'affichage (18) analogique de contact est plus faible au second point d'affichage (20) qu'au premier point d'affichage (20).

6. Procédé selon l'une des revendications 1 à 5, **caractérisé en ce que** l'élément d'affichage (18) analogique de contact est représenté au niveau du premier point d'affichage (14) avec une taille inférieure à celle au niveau du second point d'affichage (20).

7. Dispositif pour la mise en œuvre d'un procédé selon l'une des revendications 1 à 6, comportant au moins une interface d'entrée, comportant au moins une unité de commande, comportant au moins un module graphique et comportant au moins une interface de sortie, dans lequel l'interface d'entrée est destinée à recevoir des données, dans lequel l'unité de commande est destinée à déterminer une manœuvre cible et un point de manœuvre de la manœuvre cible,
dans lequel l'unité de commande établit un premier point d'affichage (14) à une première distance du point de manœuvre sur une voie de circulation (16) empruntée par le véhicule, dans lequel l'unité de commande établit un second point d'affichage (20) à une seconde distance du point de manœuvre sur une voie de circulation (16) empruntée par le véhicule, dans lequel le module graphique est destiné à générer un élément d'affichage analogique de contact,
dans lequel le module graphique modifie visuellement l'élément d'affichage (18) analogique de contact lorsqu'il se rapproche du second point d'affichage (20), dans lequel le dispositif est équipé pour et destiné à mettre en œuvre un procédé selon l'une des revendications 1 à 6.

8. Véhicule comportant un dispositif d'affichage à réalité augmentée (12) destiné à afficher des éléments d'affichage analogiques de contact, et comportant un dispositif selon la revendication 7.
